# EUROPEAN PATENT APPLICATION

(11) **EP 4 629 332 A1**
(43) Date of publication of application: **08.10.2025**
(21) Application number: 23897729.2
(22) Date of filing: 27.11.2023
(51) Int. Cl.: H01M 4/38, H01M 10/052, H01M 10/0562

(54) **NEGATIVE ELECTRODE ACTIVE MATERIAL FOR SECONDARY CELL, AND SECONDARY CELL**

(30) Priority: 29.11.2022 JP 2022190427
(71) Applicant: Panasonic Intellectual Property Management Co., Ltd., Kadoma-shi, Osaka 571-0057 (JP)
(72) Inventor: OTO Takashi, Kadoma-shi, Osaka 571-0057 (JP)
(74) Representative: Novagraaf International SA
(86) International application number: PCT/JP2023/042384
(87) International publication number: WO 2024/117081

(57) **Abstract**

A negative electrode active material for a secondary cell according to the present invention has a metallic material containing Ce, Ni, and Bi. The metallic material contains a ternary alloy consisting of Ce, Ni, and Bi. The Ce, the Ni, and the Bi in the ternary alloy have molar ratios such that the molar ratio of the Ni relative to the molar ratio of 4 of the Ce is in the range of greater than or equal to 2.5 to less than or equal to 3.5, and the molar ratio of the Bi relative to the molar ratio of 4 of the Ce is in the range of greater than or equal to 6.5 to less than or equal to 9.5.

## Description

### TECHNICAL FIELD

The present disclosure relates to a negative electrode active material for secondary batteries and to a secondary battery.

### BACKGROUND

As a secondary battery having high output and high energy density, a secondary battery which includes a positive electrode, a negative electrode, and an electrolyte and performs charging and discharging by moving lithium ions or the like between the positive electrode and the negative electrode is widely used. A carbon material is often used as a negative electrode active material constituting the negative electrode in this secondary battery, but a negative electrode active material other than the carbon material has also been proposed.

For example, Patent Literatures 1 and 2 disclose the use of an intermetallic compound represented by La₃Ni₂Sn₇ as a negative electrode active material other than a carbon material.

### CITATION LIST

### PATENT LITERATURE

Patent Literature 1: JP 5318129 B
Patent Literature 2: JP 5229540 B

### SUMMARY

However, a secondary battery using a conventional metallic material such as an intermetallic compound as a negative electrode active material has a problem that initial charge-discharge efficiency is low.

Therefore, an object of the present disclosure is to provide a negative electrode active material for secondary batteries that is capable of improving initial charge-discharge efficiency of a secondary battery using a metallic material as the negative electrode active material, and a secondary battery including the negative electrode active material for secondary batteries.

One aspect of the present disclosure is a negative electrode active material for secondary batteries that contains a metallic material containing Ce, Ni, and Bi.

In addition, one aspect of the present disclosure is a secondary battery including a negative electrode containing the negative electrode active material for secondary batteries, a positive electrode, and an electrolyte.

According to the present disclosure, the initial charge-discharge efficiency of a secondary battery using a metallic material as a negative electrode active material can be improved.

### BRIEF DESCRIPTION OF DRAWINGS

FIG. 1 is a schematic cross-sectional view showing an example of a secondary battery of the present embodiment.
FIG. 2 is a schematic cross-sectional view showing an example of an electrode assembly including a solid electrolyte.
FIG. 3 illustrates X-ray diffraction patterns in a range of 2θ = 31.5° to 34°.
FIG. 4 illustrates X-ray diffraction patterns in a range of 2θ = 22° to 24.5°.
FIG. 5 is a diagram showing charge-discharge efficiency and a capacity retention rate in each cycle.

### DESCRIPTION OF EMBODIMENTS

Hereinafter, embodiments of a secondary battery according to the present disclosure will be described in detail.

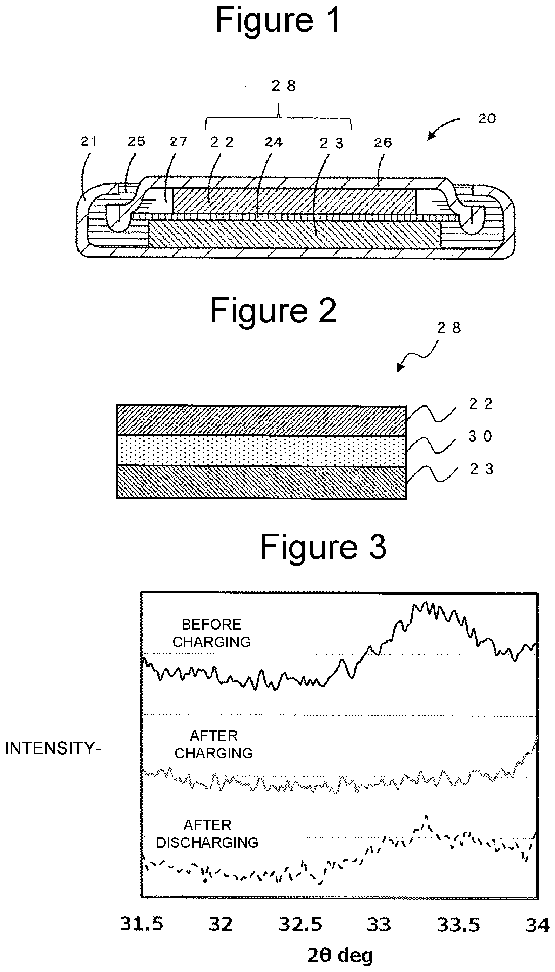

FIG. 1 is a schematic cross-sectional view showing an example of a secondary battery of the present embodiment. The shape of the secondary battery 20 shown in FIG. 1 is a so-called coin type or button type, but the shape of the secondary battery of the present embodiment is not particularly limited, and is, for example, a coin type, a button type, a sheet type, a laminated type, a cylindrical type, a flat type, a square type, or the like. The secondary battery 20 shown in FIG. 1 includes a cup-shaped battery case 21, an electrode assembly 28 in which a positive electrode 22 and a negative electrode 23 are arranged to face each other with a separator 24 interposed between the positive electrode 22 and the negative electrode 23, a gasket 25 formed of an insulating material, and a sealing plate 26 that seals the battery case 21 with the gasket 25 interposed between the sealing plate 26 and the battery case 21. In the secondary battery 20 shown in FIG. 1, a space between the positive electrode 22 and the negative electrode 23 is filled with an electrolytic solution 27.

The electrolytic solution 27 contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

An electrolyte used in the secondary battery of the present embodiment is not limited to the electrolytic solution, and may be a solid electrolyte. In a case where the solid electrolyte is used instead of the electrolytic solution, for example, as shown in FIG. 2, the electrode assembly 28 may have a configuration in which the solid electrolyte 30 is disposed between the positive electrode 22 and the negative electrode 23.

As the solid electrolyte 30, for example, a solid or gel polymer electrolyte, an inorganic solid electrolyte, or the like can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. As the inorganic solid electrolyte, for example, a material known for all-solid-state lithium ion secondary batteries and the like can be used, and examples of the inorganic solid electrolyte include an oxide-based solid electrolyte, a sulfide-based solid electrolyte, and a halogen-based solid electrolyte.

As the solid electrolyte 30, for example, a sulfide-based solid electrolyte is preferable in terms of ion conductivity and the like. Examples of the sulfide-based solid electrolyte include Li₂-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂. In addition, the sulfide-based solid electrolyte may have an aldirodite type crystal structure. The sulfide-based solid electrolyte may be Li₇₋ₐAS₆₋ₐX2ₐ. In this case, A is at least one selected from the group consisting of P and As, X2 is at least one selected from the group consisting of Cl, Br, and I, and a satisfies 0 ≤ a ≤ 1. Li₇₋ₐAS₆₋ₐX2ₐ is a sulfide-based solid electrolyte having an aldirodite type crystal structure. The sulfide-based solid electrolyte may be, for example, Li₃PS₅Cl. Li₃PS₅Cl is a sulfide-based solid electrolyte having an aldirodite type crystal structure.

The positive electrode 22 includes, for example, a positive electrode current collector and a positive electrode mixture layer disposed on the positive electrode current collector. The positive electrode mixture layer may be disposed on one surface or both surfaces of the positive electrode current collector. As the positive electrode current collector, a foil of a metal that is aluminum or the like and is stable in a potential range of the positive electrode 22, a film in which the metal is disposed on a surface layer thereof, or the like can be used.

The positive electrode mixture layer contains a positive electrode active material. In addition, the positive electrode mixture layer may contain a binding material, a conductive agent, and the like. The positive electrode 22 can be produced by, for example, applying a positive electrode mixture slurry containing a positive electrode active material, a binding material, a conductive agent, and the like to the positive electrode current collector, and drying and rolling the applied film to form the positive electrode mixture layer on the positive electrode current collector.

Examples of the positive electrode active material include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly, or a plurality of kinds of them may be mixed and used. From the viewpoint that a high capacity of the secondary battery can be achieved, it is desirable that the positive electrode active material contain a lithium nickel composite oxide such as LiₓNiO₂, LiₓCo_{y}Ni_{1-y}O₂, or LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3).

Examples of the conductive agent include carbon materials such as carbon black, acetylene black, Ketjenblack, graphite, carbon nanofiber, carbon nanotube, and graphene. Examples of the binding material include fluororesins such as polytetrafluoroethylene (PTFE) and polyvinylidene fluoride (PVDF), polyacrylonitrile (PAN), polyimide, acrylic resins, polyolefin, carboxymethyl cellulose (CMC) or a salt thereof, styrene-butadiene rubber (SBR), polyethylene oxide (PEO), polyvinyl alcohol (PVA), and polyvinyl pyrrolidone (PVP).

The negative electrode 23 includes, for example, a negative electrode current collector and a negative electrode mixture layer disposed on the negative electrode current collector. The negative electrode mixture layer may be disposed on one surface or both surfaces of the negative electrode current collector. As the negative electrode current collector, a foil of a metal that is copper or a copper alloy, or the like and is stable in a potential range of the negative electrode, a film in which the metal is disposed on a surface layer thereof, or the like can be used.

The negative electrode mixture layer contains a negative electrode active material. The negative electrode mixture layer may contain a binding material, a conductive agent, and the like. As the conductive agent and the binding material, the same materials as those on the positive electrode side can be used. The negative electrode 23 can be produced by, for example, applying a negative electrode mixture slurry containing a negative electrode active material, a conductive agent, a binding material, and the like to the negative electrode current collector, and drying and rolling the applied film to form the negative electrode mixture layer on the negative electrode current collector.

The negative electrode active material contains a metallic material containing Ce, Ni, and Bi. In this case, the metallic material containing Ce, Ni, and Bi may be a mixture of a single metal, a mixture of an alloy containing two metals, a mixture of a single metal and an alloy containing two metals, or an alloy containing three metals as long as the metallic material contains Ce, Ni, and Bi. The mixture may be, for example, a mixture of a Ce simple substance, a Ni simple substance, or a Bi simple substance. In addition, the mixture may be, for example, a mixture of an alloy containing Ce and Ni and a Bi simple substance, a mixture of a Ce simple substance and an alloy containing Ni and Bi, a mixture of a Ni simple substance and an alloy containing Ce and Bi, or the like. The mixture may be a mixture containing at least two of an alloy containing Ce and Ni, an alloy containing Ni and Bi, and an alloy containing Ce and Bi. The simple substances in the present embodiment merely mean general simple substances, and thus may contain a trace amount of impurities (for example, the amount is less than or equal to 1% by mass). The alloys are, for example, solid solutions, eutectics (eutectic mixtures), intermetallic compounds, or the like. The alloys may contain other metal elements in addition to Ce, Ni, and Bi, but the other metal elements are preferably in a trace amount (for example, the amount is less than or equal to 1% by mass). An oxide film may be formed on the surfaces of the simple substances or the alloys.

By using the negative electrode active material containing the metallic material containing Ce, Ni, and Bi, the initial charge-discharge efficiency of the secondary battery can be improved. In addition, the metallic material containing Ce, Ni, and Bi preferably contains an alloy containing Ce, Ni, and Bi from the viewpoint of further improving the initial charge-discharge efficiency of the secondary battery, the viewpoint of improving the charge-discharge cycle characteristics of the secondary battery, and the like. The alloy containing Ce, Ni, and Bi may contain other metal elements in addition to Ce, Ni, and Bi, but is preferably a ternary alloy composed of Ce, Ni, and Bi. In this ternary alloy, elements other than Ce, Ni, and Bi may be inevitably mixed, but the amount thereof is very small, and is desirably, for example, less than or equal to 1% by mass.

Regarding the molar ratios of Ce, Ni, and Bi in the ternary alloy composed of Ce, Ni, and Bi, the molar ratio of Ni relative to the molar ratio of 4 of the Ce is preferably in the range of greater than or equal to 2.5 to less than or equal to 3.5, and the molar ratio of Bi relative to the molar ratio of 4 of the Ce is preferably in the range of greater than or equal to 6.5 to less than or equal to 9.5 from the viewpoint of further improving the initial charge-discharge efficiency of the secondary battery, the viewpoint of improving the charge-discharge cycle characteristics of the secondary battery, and the like. Examples of the alloy having such a composition include an intermetallic compound belonging to a trigonal crystal system and belonging to a space group of P4m2 [115] and having a crystal structure of Ce₄Ni₃Bi₈. The content of each of the elements (Ce, Ni, Bi) in the alloy can be measured by, for example, inductively coupled plasma atomic emission spectroscopy (ICP).

The alloy containing at least two of Ce, Ni, and Bi can be produced, for example, by weighing raw materials, melting the raw materials into a molten metal, and then cooling the molten metal. As the raw materials, the simple substances (metal mass, metal powder, or the like) of the constituent elements (Ce, Ni, Bi) of the alloy can be used. The melting of the raw materials is desirably performed using an arc melting furnace in an inert gas atmosphere such as argon. A metal mass containing the constituent elements with a desired composition is obtained by cooling the molten metal. In the metal mass obtained by cooling the molten metal, the alloy may not be sufficiently crystallized. Therefore, for example, it is desirable to heat and anneal the metal mass in a reduced pressure lower than or equal to 2.0 × 10⁻³ Pa or a vacuum atmosphere. The heating temperature during the annealing is not particularly limited, but may be, for example, higher than or equal to 600°C and lower than or equal to 900°C. The heating time during the annealing is not particularly limited, but may be, for example, longer than or equal to 10 hours.

The negative electrode active material may contain a material usable for a negative electrode active material of a conventional lithium ion secondary battery in addition to the metallic material containing Ce, Ni, and Bi as long as the effect of the present disclosure is not impaired, and examples of the negative electrode active material include carbon materials such as graphite, metal compounds such as an alloy containing a lithium element, a metal oxide containing a lithium element, and a metal nitride containing a lithium element, and silicon. Examples of the alloy containing a lithium element include a lithium aluminum alloy, a lithium tin alloy, a lithium lead alloy, and a lithium silicon alloy. Examples of the metal oxide containing a lithium element include lithium titanates (Li₄Ti₅O₁₂ and the like). Examples of the metal nitride containing a Li element include lithium-cobalt nitrides, lithium-iron nitrides, and lithium-manganese nitrides.

The separator 24 is not particularly limited as long as the separator 24 allows lithium ions to pass through and has a function of electrically separating the positive electrode 22 from the negative electrode 23, and for example, a porous sheet made of a resin, an inorganic material, or the like is used as the separator 24. Specific examples of the porous sheet include a microporous thin film, a woven fabric, and a nonwoven fabric. Examples of the material of the separator 24 include olefin-based resins such as polyethylene and polypropylene, polyamide, polyamideimide, and cellulose. Examples of the inorganic material constituting the separator 24 include glass such as borosilicate glass, silica, alumina, and titania, and ceramics. The separator 24 may be a laminate including a cellulose fiber layer and a thermoplastic resin fiber layer formed of an olefin-based resin or the like. Further, a multilayer separator including a polyethylene layer and a polypropylene layer may be used, and a separator having a surface coated with a material such as an aramid-based resin or a ceramic may be used.

### EXAMPLES

Hereinafter, the present disclosure will be further described with reference to Examples. However, the present disclosure is not limited to these Examples.

### <Example>

### [Production of Negative Electrode Active Material]

As raw materials, single materials of Ce, Ni, and Bi were weighed such that the molar ratio of Ce, Ni, and Bi was 4:3:8, and were put on water-cooled copper hearth in an arc melting furnace. Thereafter, the inside of the arc melting furnace was replaced with an argon atmosphere, and the raw materials were melted and quenched by an arc melting method to obtain a button-shaped metal mass. A step of inverting the obtained metal mass in the furnace using an inverting rod, melting and quenching the metal mass again by an arc melting method, and further inverting the metal mass to melt and quench the metal mass was repeated three times to obtain a metal mass composed of an alloy containing Ce, Ni, and Bi. This metal mass was ground in a mortar and used as a negative electrode active material.

The obtained negative electrode active material was subjected to X-ray diffraction measurement using a CuKα ray to obtain an X-ray diffraction pattern. As a result of analyzing this X-ray diffraction pattern, it was estimated that the obtained negative electrode active material was an alloy (intermetallic compound) belonging to a space group of P4m2 [115] in a trigonal crystal system and having a crystal structure of Ce₄Ni₃Bi₈. Note that the density of Ce₄Ni₃Bi₈ is 9.91 g/cm³ as a calculated value.

### [Solid Electrolyte]

A sulfide-based solid electrolyte Li₆PS₅Cl (manufactured by Ampcera) was used.

### [Counter Electrode]

An indium-lithium alloy (molar ratio In:Li = 1: 1) was used. The indium-lithium alloy was prepared by pressing a small piece of lithium foil against an indium foil and diffusing lithium into indium.

### [Preparation of Test Cell]

A mixture obtained by mixing the negative electrode active material, the solid electrolyte, and carbon nanotube at a mass ratio of 60:35:5 was filled in an insulating outer cylinder having an inner diameter of 9.4 mm. A solid electrolyte (80 parts by mass) was laminated on the filled mixture, and then an iridium-lithium alloy was laminated to obtain a laminate. A pressure of 4 MPa was applied to the laminate to obtain an electrode assembly in which a working electrode, the solid electrolyte, and a counter electrode were laminated in this order. The working electrode is the mixture of the negative electrode active material, the solid electrolyte, and the carbon nanotube, and the counter electrode is the iridium-lithium alloy. Next, a current collector formed of stainless steel was attached to the working electrode and the counter electrode, and a current collector lead was attached to the current collector. Then, a test cell was obtained by blocking the inside of the insulating outer cylinder from the outside atmosphere using an insulating ferrule, and sealing the inside of the insulating outer cylinder.

### <Comparative Example>

A negative electrode active material was prepared in the same manner as in Example 1 except that in the production of the negative electrode active material, a simple material of each of La, Ni and Sn was weighed as a raw material so that the molar ratio of La, Ni, and Sn was 3:2:7. An X-ray diffraction pattern of the obtained negative electrode active material was analyzed, and it was estimated that the negative electrode active material was an alloy (intermetallic compound) having a crystal structure of La₃Ni₂Sn₇. Note that the density of La₃Ni₂Sn₇ is 7.53 g/cm³ as a calculated value.

A test cell was prepared in the same manner as in Example except that the negative electrode active material described above was used.

### <Charge-Discharge Test>

Under an environmental temperature of 25°C, the test cells in Example and Comparative Example were charged up to -0.6 V vs. InLi (0.02 V vs. Li) at a constant current value of 0.05 C in terms of a capacity of 150 mAh/g, and then discharged up to 1.38 V vs. InLi (2.0 V vs. Li). A charge capacity and a discharge capacity at this time were regarded as an initial charge capacity and an initial discharge capacity, and the initial charge-discharge efficiency was calculated from the following equation. The initial charge-discharge efficiency (%) = (the initial discharge capacity/the initial charge capacity) × 100

The initial charge-discharge efficiency was 94.5% in Example in which the metallic material containing Ce, Ni, and Bi was used as the negative electrode active material. On the other hand, the initial charge-discharge efficiency in Comparative Example in which the metallic material containing Ce, Ni, and Bi was not used as the negative electrode active material was 79.3%.

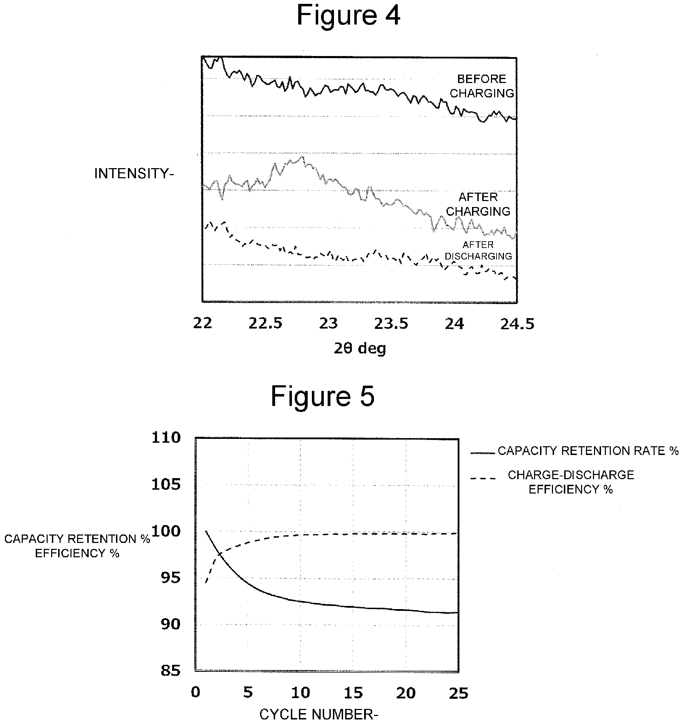

In Example, the negative electrode active material taken out from the test cell before the charge-discharge test (before charging), after charging by the charge-discharge test, and after the charge-discharge test (after discharging) was subjected to X-ray diffraction measurement using a CuKα ray to obtain X-ray diffraction patterns. The results are shown in FIGS. 3 and 4. FIG. 3 illustrates X-ray diffraction patterns in a range of 2θ = 31.5° to 34°, and FIG. 4 illustrates X-ray diffraction patterns in a range of 2θ = 22° to 24.5°.

As shown in FIG. 3, in the X-ray diffraction pattern before charging, a peak derived from the crystal structure of Ce₄Ni₃Bi₈ was observed in the vicinity of 2θ = 33.3°, but the peak disappeared in the X-ray diffraction pattern after charging. In the X-ray diffraction pattern after discharging, a peak was observed again. As shown in FIG. 4, a peak derived from Li₃Bi was observed in the vicinity of 2θ = 22.6° in the X-ray diffraction pattern after charging, but disappeared in the X-ray diffraction pattern after discharging. From this, it can be said that Ce₄Ni₃Bi₈ functions as a negative electrode active material that stores Li by charging and releases Li by discharging.

### <Charge-Discharge Cycle Test>

For the test cell of Example, 25 cycles of charge and discharge were performed under the same conditions as those in the charge-discharge test. The charge-discharge efficiency and the capacity retention rate in each cycle were calculated according to the following equations. The charge-discharge efficiency (%) = (the discharge capacity in each cycle/the charge capacity in each cycle) × 100 The capacity retention rate (%) = (the discharge capacity in each cycle/the initial discharge capacity) ×100

FIG. 5 is a diagram showing the charge-discharge efficiency and the capacity retention rate in each cycle. As shown in FIG. 5, in the test cell in Example, the capacity retention rate was higher than or equal to 90% when 25 cycles of charge and discharge were performed, and the charge-discharge efficiency was 99.9% when 25 cycles of charge and discharge were performed.

### REFERENCE SIGNS LIST

- 20: Secondary battery
- 21: Battery case
- 22: Positive electrode
- 23: Negative electrode
- 24: Separator
- 25: Gasket
- 26: Sealing plate
- 27: Electrolytic solution
- 28: Electrode assembly
- 30: Solid electrolyte

## Claims

1. A negative electrode active material for secondary batteries, comprising a metallic material containing Ce, Ni, and Bi.

2. The negative electrode active material for secondary batteries according to claim 1, wherein the metallic material contains an alloy containing Ce, Ni, and Bi.

3. The negative electrode active material for secondary batteries according to claim 2, wherein the alloy containing Ce, Ni, and Bi is a ternary alloy composed of Ce, Ni, and Bi.

4. The negative electrode active material for secondary batteries according to claim 3, wherein the Ce, the Ni, and the Bi in the ternary alloy have molar ratios such that the molar ratio of the Ni relative to the molar ratio of 4 of the Ce is in a range of greater than or equal to 2.5 to less than or equal to 3.5, and the molar ratio of the Bi relative to the molar ratio of 4 of the Ce is in a range of greater than or equal to 6.5 to less than or equal to 9.5.

5. A secondary battery comprising: a negative electrode containing the negative electrode active material for secondary batteries according to any one of claims 1 to 4, a positive electrode; and an electrolyte.

6. The secondary battery according to claim 5, wherein the electrolyte is a solid electrolyte.

7. The secondary battery according to claim 6, wherein the solid electrolyte is a sulfide-based solid electrolyte.
